# FASCICULE DE BREVET EUROPEEN

(11) **EP 0 991 510 B1**
(45) Date de publication et mention de la délivrance du brevet: **20.03.2002**
(21) Numéro de dépôt: 98933721.7
(22) Date de dépôt: 25.06.1998
(51) Int. Cl.: B27J 5/00, C08L 97/00

(54) **PROCEDE DE FABRICATION D'UNE COMPOSITION UTILISABLE POUR LA REALISATION DE BOUCHONS, COMPOSITION ET BOUCHON COMPRENANT UNE TELLE COMPOSITION**
VERFAHREN ZUR HERSTELLUNG EINER ZUSAMMENSTEZUNG, DIE ZUR HERSTELLEN VON PFROPFENVERWENDBAR IST, ZUSAMMENSETZUNG UND EINE SOLCHE ZUSAMMENSTEZUNG ENTHALTENDER PFROPFEN
METHOD FOR MAKING A COMPOSITION FOR PRODUCING CORKS, COMPOSITION AND CORK COMPRISING SAME

(30) Priorité: 27.06.1997 FR 9708111
(43) Date de publication de la demande: 12.04.2000
(73) Titulaire: PERNOD-RICARD, 75008 Paris (FR)
(72) Inventeur: ROBICHON, Patrice, F-78400 Chatou (FR); NOBLE, Philippe, F-34500 Béziers (FR)
(74) Mandataire: Warcoin, Jacques
(86) Numéro de dépôt international: FR9801349
(87) Numéro de publication internationale: WO9900230

(56) Documents cités:
- NL-A- 8 902 394
- US-A- 1 455 762

## Description

La présente invention concerne de manière générale la fabrication des bouchons à base de liège, et plus particulièrement un procédé de fabrication d'une composition utilisable pour la réalisation de bouchons.

Elle concerne également une telle composition et un bouchon comprenant cette composition, destiné à fermer les bouteilles de boissons alcoolisées ou non, telles que par exemple les vins, tranquilles ou effervescentes, les spiritueux, les cidres, les boissons aux fruits carbonatées.

Le liège à partir duquel des bouchons sont fabriqués, est un tissu végétal produit par l'assise subérophellodermique du chêne liège. Il est constitué de cellules mortes à structure alvéolaire. Ces cellules sont remplies de gaz dont la composition est très voisine de celle de l'air.

Le liège se compose pour l'essentiel d'environ 45% de subérine, qui est le constituant principal des cellules alvéolaires, d'environ 27% de lignine de structure fibreuse, se retrouvant en inclusion dans des canaux ou à la surface de l'écorce, d'environ 12% de cellulose et d'environ 17% d'autres produits divers tels que les céroïdes, les tanins, des matières minérales, et l'eau.

Le liège est un bon matériau pour le bouchage et la conservation des boissons tranquilles ou effervescentes, en particulier les vins ou autres alcools mis en bouteilles, car c'est une matière compressible et suffisamment élastique, étanche et hydrophobe. Le liège contient environ 5% d'humidité mais s'hydrate lentement. Il est juste assez étanche aux gaz pour permettre aux vins ou aux alcools de vieillir correctement sans s'oxyder.

Toutefois, le liège est une matière naturelle qui présente des défauts plus ou moins importants.

Ces défauts sont constitués majoritairement par des canaux à parois lignifiées ou d'inclusions de lignine.

Ils ont une influence néfaste sur l'élasticité et l'étanchéité du bouchon. En outre, ils contiennent des substances ou leurs précurseurs qui peuvent donner aux vins ou alcools bouchés, lors du vieillissement, des goûts désagréables appelés 'goûts de bouchon'.

On distingue environ 7 classes de qualité de bouchons à base de liège, réparties sur une échelle allant de 0 pour la meilleure qualité de liège pratiquement exempt de défauts, jusqu'à 6 pour la qualité la plus basse de liège présentant une forte proportion de défauts.

Pour tenter d'éliminer les inconvénients susmentionnés liés aux défauts du liège naturel de moyenne et basse qualité tout en maintenant un coût de fabrication des bouchons relativement faible, par rapport à la solution qui consiste à fabriquer les bouchons dans un liège naturel noble exempt de défauts, les fabricants de bouchons ont réalisés des bouchons agglomérés constitués de particules de liège de moyenne ou basse qualité et d'un liant ou colle qui assure la cohésion des bouchons.

Il est connu également des bouchons composites dont un exemple est décrit dans le document FR 2 672 002.

Un tel bouchon est constitué principalement d'une poudre de matière végétale ligneuse provenant notamment du liège, de microsphères expansées en matière plastique et d'une colle alimentaire.

Toutefois, les bouchons agglomérés, bien qu'ils soient économiques à fabriquer, présentent des caractéristiques physico-chimiques et mécaniques bien inférieures à celles des bouchons en liège naturel et ne peuvent alors être utilisés pour la conservation des vins ou alcools destinés à vieillir en bouteilles.

De plus, tout comme- les bouchons composites précités, l'utilisation des bouchons agglomérés ne permet pas d'éliminer l'apparition des goûts de bouchon dans les vins ou les alcools mis en bouteilles et bouchés avec de tels bouchons.

Pour pallier les inconvénients précités, la présente invention propose un nouveau procédé de fabrication d'une composition utilisable pour la réalisation de bouchons, une telle composition permettant en particulier d'éliminer les risques d'apparition de goût de bouchon dans des alcools mis en bouteilles.

Plus particulièrement, le procédé selon l'invention comprend les étapes suivantes :
a) on broie des plaques de liège en granulés de petite taille,
b) on décompose lesdits granulés de liège, en granulés à forte teneur en lignine et en granulés à forte teneur en subérine,
c) on sépare les granulés riches en lignine des granulés riches en subérine pour ne garder dans ladite composition que les granulés riches en subérine.

Plusieurs études ont permis de mettre en évidence certaines substances contenues dans le liège à partir duquel sont réalisés les bouchons, qui engendrent des altérations du vin lui donnant un goût de bouchon.

Les principales substances identifiées sont :
- le 2,4,6-Trichloroanisole (2,4,TCA)
- le diméthyl-2,5 pyrazine
- le méthylthio-2 éthyl-3 pyrazine
- le éthyl-4 phénol
- le dichloro-2,6 phénol
- le géosmine
- le guaïacol
- le 1-octen-3-one
- le 1-octen-3-ol
- le 2-Méthylisobornéol

Ces substances précitées, même à faibles concentrations, donnent au vin des arômes rédhibitoires.

Ces substances ou leurs précurseurs sont localisé(e)s dans les parties ligneuses du liège. Ainsi la teneur en Trichlorcanisole dans le liège augmente quand on se rapproche de l'écorce du chêne liège (partie lignifiée). Le guaïacol est produit par l'action d'une bactérie sur la lignine. Les autres substances précitées ont comme précurseurs les tanins, des bactéries ou moisissures qui se trouvent préférentiellement dans la lignine ou les canaux lignifiés.

Ainsi, conformément à l'invention on réalise une composition utilisable pour la fabrication de bouchons, quasiment exempt de lignine. Comme cela sera explicité ultérieurement à l'aide de résultats de tests, les bouchons réalisés avec une telle composition et bouchant des bouteilles de vins ou d'alcools, ne transmettent alors dans aucun cas un goût désagréable, dit goût de bouchon, aux vins et alcools vieillis.

Selon une caractéristique du procédé conforme à l'invention, à l'étape a) les granulés de liège obtenus par broyage présentent une taille comprise entre 3 et 8 mm.

Selon un mode de réalisation préféré du procédé conforme à l'invention, à l'étape b), la décomposition des granulés de liège, s'effectue par l'intermédiaire d'ondes de chocs se propageant à l'intérieur desdits granulés, la vitesse de propagation desdites ondes de chocs étant différentes dans les composés de différentes densités.

Cette méthode de décomposition par ondes de chocs est ici envisageable car la subérine et la lignine présentent des densités différentes.

Avantageusement, selon l'invention, il peut être prévu que les ondes de chocs soient produites par l'intermédiaire d'un plasma créé dans un milieu aqueux.

Pour cela, une méthode consiste à immerger les granulés de liège à décomposer dans le milieu aqueux constituant le milieu de propagation des ondes de chocs jusqu'auxdits granulés.

Cette méthode est la suivante.

On place les granulés de liège obtenus par broyage dans une chambre d'échantillon (dont les dimensions d'un pilote expérimental sont : une hauteur égale à environ 40 mm et un diamètre égale à environ 200 mm) et on met cette chambre d'échantillon en compression dans une cuve remplie d'eau. On crée un arc électrique dans l'eau contenue dans la cuve en chargeant des condensateurs puis en libérant l'énergie capacitive stockée par des décharges impulsionnelles. L'arc électrique crée entre les deux pôles d'une électrode plongée dans l'eau, entraîne la formation d'un plasma qui induit les ondes de chocs se propageant à différentes vitesses dans les composés de différentes densités des granulés en liège.

Les contraintes mécaniques engendrées par le passage des ondes de chocs à la frontière entre deux composés différents, ici la subérine et la lignine, permettent de les séparer.

On peut également prévoir que le milieu de propagation des ondes de chocs jusqu'aux granulés de liège à décomposer soit l'air au lieu de l'eau.

Dans ce cas, les ondes de chocs seront transmises aux granulés via une membrane souple qui les sépare de l'électrode qui est toujours placée dans un milieu aqueux en vue de la formation du plasma qui engendre lesdites ondes.

Selon d'autres modes de réalisations du procédé conforme à l'invention, les ondes de chocs peuvent être produites par explosion ou par décompression.

Selon d'autres caractéristiques du procédé conforme à l'invention, à l'étape c) la séparation des granulés riches en subérine des granulés riches en lignine peut être réalisée par flottation ou par centrifugation ou encore par diffusion.

Le procédé selon l'invention comprend de manière avantageuse une étape supplémentaire consistant à mélanger les granulés riches en subérine isolés avec un liant qui peut être par exemple une colle alimentaire du type polyuréthanne ou acrylique.

L'invention concerne également une composition réalisée à l'aide du procédé précité selon l'invention, utilisable pour la fabrication de bouchons, qui comprend des granulés riches en subérine.

Différents tests ont été menés sur trois lots de granulés différents.

Le premier lot A comprend les granulés de liège initiaux obtenus par broyage (liège standard).

Le deuxième lot S comprend les granulés riches en subérine obtenus selon le procédé précité pour la composition selon l'invention.

Le troisième lot L comprend les déchets du procédé selon l'invention, c'est à dire les granulés riches en lignine.

Une mesure de masse volumique et une analyse chimique ont été effectuées sur les trois lots de granulés différents. L'analyse chimique consiste à oxyder au nitrobenzène les granulés des différents lots et à mesurer la concentration des produits de dégradation résultant de l'oxydation et plus particulièrement la concentration en lignine exprimée en syringaldéhyde qui, selon toute probabilité, provient exclusivement de la dégradation de la lignine.

En outre, une analyse organoleptique a été réalisée sur les granulés des différents lots, par macération dans un vin blanc neutre.

Les résultats des différentes mesures et analyses sont présentés dans le tableau 1 suivants.

**tableau 1**

| | Lot S | Lot A | Lot L |
|---|---|---|---|
| Masse volumique (Kg/m³) | 89,1 (-30%) | 127,5 | 131 (+2,8%) |
| Dégustation * | 1,8 | 3,5 | 5,2 |
| Analyse chimique concentration (g/l) en Syringaldéhyde | 0,46 (-14,8%) | 0,54 | 0,66 (+22,2%) |
| NB : les pourcentages du tableau sont donnés par rapport au lot A. | | | |

| | | | |
|---|---|---|---|
| * L'analyse organoleptique s'est faite par rapport à un lot de bouchons en liège agglomérés standard. | | | |

Il ressort du tableau 1 que les granulés du lot S (riches en subérine) présentent une masse volumique inférieure à 90 kg/m³, une concentration en lignine exprimée en syringaldéhyde de l'ordre de 0,46 g/l ce qui est inférieur d'environ 15% à celle des granulés de liège initiaux du lot A. Ces deux résultats mettent bien en évidence que les granulés du lot S, qui sont ceux de la composition selon l'invention, sont à forte teneur en subérine (pourcentage de subérine proche de 100%).

Par contre, les granulés du lot L présentent une masse volumique de l'ordre de 131 kg/m³ supérieure à la masse volumique des granulés de liège initiaux. Leur concentration en lignine exprimée en syringaldéhyde est de l'ordre de 0,66 g/l ce qui est supérieur d'environ 22% à celle des granulés de liège initiaux. Ceci montre bien que les granulés du lot L sont à forte teneur en lignine.

On notera que les résultats d'analyse chimique, en particulier la concentration en lignine exprimée en syringaldéhyde, dépendent bien entendu de la concentration en lignine du lot de granulés de liège standard de départ.

Ainsi, les valeurs de la concentration en syringaldéhyde indiquées pour les lots S et L dans le tableau 1 ne sont pas significatives dans l'absolu, mais doivent être prises en comparaison avec la valeur de la concentration en syringaldéhyde indiquée pour le lot A de départ.

La même analyse chimique a été réalisée sur d'autres lots de granulés riches en subérine obtenus selon le procédé conforme à l'invention à partir de différents lots de liège standard.

Les résultats d'analyse obtenus permettent d'affirmer que dans un lot de granulés enrichis en subérine par le procédé selon l'invention, la concentration en lignine (exprimée en syringaldéhyde) a été abaissée d'un pourcentage compris entre 15% et 50% par rapport à la concentration en lignine des granulés de liège standard de départ, alors que le lot de déchets voit sa concentration en lignine (exprimée en syringaldéhyde) augmentée d'un pourcentage compris entre 20% et 100% par rapport à la concentration en syringaldéhyde des granulés de liège de départ.

En ce qui concerne le test organoleptique, les notes qui apparaissent dans le tableau 1 ont été données pour indiquer la proximité de l'échantillon de granulés considéré avec un témoin placé à la valeur 0 (vin blanc neutre seul).

Comme le montre les résultats du tableau 1, les granulés du lot S sont proches du témoin, goût neutre. Les granulés du lot L sont très distincts du témoin, avec une note de terre, de moisi et de poussière. Les granulés du lot A sont en position intermédiaire, avec une note liège, poudré.

Il apparaît donc que les granulés riches en subérine obtenus par le procédé selon l'invention et faisant partie de la composition selon l'invention, possède des caractéristiques organoleptiques nettement supérieures à celles des granulés du lot L qui sont les granulés déchets riches en lignine.

Par ailleurs, dans la composition selon l'invention les granulés riches en subérine sont avantageusement mélangés à un liant qui est de préférence une colle alimentaire du type polyuréthanne ou acrylique. Ainsi, les bouchons fabriqués à partir d'une telle composition présentent de bonnes caractéristiques mécaniques et d'étanchéité.

Le coût de mise en oeuvre du procédé selon l'invention pour obtenir ladite composition pour la réalisation de bouchons, est raisonnable.

## Revendications

1. Procédé de fabrication d'une composition utilisable pour la réalisation de bouchons, **caractérisé en ce qu'**il comprend les étapes suivantes :
a) on broie des plaques de liège en granulés de petite taille,
b) on décompose lesdits granulés de liège en granulés à forte teneur en lignine et en granulés à forte teneur en subérine,
c) on sépare les granulés riches en lignine des granulés riches en subérine pour ne garder dans ladite composition que la granulés riches en subérine.

2. Procédé selon la revendication 1, **caractérisé en ce qu'**à l'étape a) les granulés de liège obtenus par broyage présentent une taille comprise entre 3 et 8 mm.

3. Procédé selon l'une des revendications 1 ou 2, **caractérisé en ce qu'**à l'étape b), la décomposition des granulés de liège, s'effectue par l'intermédiaire d'ondes de chocs se propageant à l'intérieur desdits granulés, la vitesse de propagation desdites ondes de chocs étant différente dans les composés de différentes densités.

4. Procédé selon la revendication 3, **caractérisé en ce que** les ondes de chocs sont produites par l'intermédiaire d'un plasma créé dans un milieu aqueux.

5. Procédé selon la revendication 4, **caractérisé en ce que** le milieu de propagation des ondes de chocs jusqu'aux granulés de liège est le milieu aqueux lui-même dans lequel sont immergés lesdits granulés.

6. Procédé selon la revendication 4, **caractérisé en ce que** le milieu de propagation des ondes de chocs jusqu'aux granulés de liège est l'air, les ondes de chocs étant transmises aux granulés via une membrane souple qui les sépare d'une électrode placée dans le milieu aqueux en vue de la formation du plasma qui engendre lesdites ondes.

7. Procédé selon la revendication 3, **caractérisé en ce que** les ondes de chocs sont produites par explosion.

8. Procédé selon la revendication 3, **caractérisé en ce que** les ondes de chocs sont produites par décompression.

9. Procédé selon l'une des revendications 1 à 8, **caractérisé en ce que** l'étape c) de séparation est réalisée par flottation.

10. Procédé selon l'une des revendications 1 à 8, **caractérisé en ce que** l'étape c) de séparation est réalisée par centrifugation.

11. Procédé selon l'une des revendications 1 ou 8, **caractérisé en ce que** l'étape c) de séparation est réalisée par diffusion.

12. Procédé selon l'une des revendications 1 à 11, **caractérisé en ce qu'**il comprend une étape supplémentaire consistant à mélanger les granulés riches en subérine isolés avec un liant qui peut être par exemple une colle alimentaire du type polyuréthanne ou acrylique.

13. Composition utilisable pour la fabrication de bouchons, **caractérisée en ce qu'**elle comprend des granulés riches en subérine.

14. Composition selon la revendication 13, **caractérisée en ce que** lesdits granulés riches en subérine présentent une masse volumique inférieure à 90 kg/m³.

15. Composition selon l'une des revendications 13 à 14, **caractérisée en ce que** lesdits granulés riches en subérine sont mélangés avec un liant.

16. Composition selon la revendication 15, **caractérisée en ce que** le liant est une colle alimentaire du type polyuréthanne ou acrylique.

17. Bouchon destiné à fermer les bouteilles de boissons alcoolisées tranquilles ou effervescentes ou de boissons carbonatées, **caractérisé en ce qu'**il comprend la composition selon l'une des revendications 13 à 16.

## Patentansprüche

1. Verfahren zur Herstellung einer Zusammensetzung, welche zur Herstellung von Flaschenstöpseln geeignet ist, **dadurch gekennzeichnet, dass** es folgende Stufen umfasst:
a) Zerkleinern der Korkplatten in Körnchen kleiner Größe,
b) Trennen der Korkkörnchen in Körnchen mit hohem Ligningehalt und Körnchen mit hohem Suberingehalt,
c) Abtrennen der ligninreichen Körnchen von den suberinreichen Körnchen, um in der Zusammensetzung ausschließlich suberinreiche Körnchen zu behalten.

2. Verfahren gemäß Anspruch 1, **dadurch gekennzeichnet, dass** in Stufe a) die durch Zerkleinerung erhaltenen Korkkörnchen eine Größe zwischen 3 und 8 mm aufweisen.

3. Verfahren gemäß einem der Ansprüche 1 und 2, **dadurch gekennzeichnet, dass** in Stufe b) die Trennung der Korkkügelchen mit Hilfe von Schallwellen, die sich ins Innere der Körnchen ausbreiten, bewirkt wird, wobei die Geschwindigkeit der Ausbreitung der Schallwellen in Zusammensetzungen verschiedener Dichten verschieden ist.

4. Verfahren gemäß Anspruch 3, **dadurch gekennzeichnet, dass** die Schallwellen mit Hilfe eines in einem wässrigen Medium erzeugten Plasmas erzeugt werden.

5. Verfahren gemäß Anspruch 4, **dadurch gekennzeichnet, dass** das Medium zur Ausbreitung der Schallwellen bis zu den Korkkügelchen das wässrige Medium ist, in dem die Kügelchen immergiert sind.

6. Verfahren gemäß Anspruch 4, **dadurch gekennzeichnet, dass** das Medium zur Ausbreitung der Schallwellen bis zu den Korkkügelchen Luft ist, wobei die Schallwellen auf die Kügelchen über eine dehnbare Membran übertragen werden, die diese von einer Elektrode trennt, die in dem wässrigen Medium im Hinblick auf die Plasmaformation, welche die Wellen erzeugt, angeordnet ist.

7. Verfahren gemäß Anspruch 3, **dadurch gekennzeichnet, dass** die Schallwellen durch Explosion erzeugt werden.

8. Verfahren gemäß Anspruch 3, **dadurch gekennzeichnet, dass** die Schallwellen durch Dekompression erzeugt werden.

9. Verfahren gemäß einem der Ansprüche 1 bis 8, **dadurch gekennzeichnet, dass** die Trennungsstufe c) durch Flotation bewirkt wird.

10. Verfahren gemäß einem der Ansprüche 1 bis 8, **dadurch gekennzeichnet, dass** die Trennungsstufe c) durch Zentrifugation bewirkt wird.

11. Verfahren gemäß einem der Ansprüche 1 bis 8, **dadurch gekennzeichnet, dass** die Trennungsstufe c) durch Diffusion bewirkt wird.

12. Verfahren gemäß einem der Ansprüche 1 bis 11, **dadurch gekennzeichnet, dass** es eine zusätzliche Stufe umfasst, die in dem Mischen der isolierten suberinreichen Kügelchen mit einem Bindemittel, bei dem es sich beispielsweise um einen Nahrungsmittel-Klebstoff vom Polyurethan- oder Acryltyp handelt, besteht.

13. Zusammensetzung, welche zur Herstellung von Flaschenstöpseln verwendet werden kann, **dadurch gekennzeichnet, dass** sie Kügelchen enthält, die reich an Suberin sind:

14. Zusammensetzung gemäß Anspruch 13, **dadurch gekennzeichnet, dass** die suberinreichen Kügelchen eine Volumenmasse unter 90 kg/m³ aufweisen.

15. Zusammensetzung gemäß einem der Ansprüche 13 und 14, **dadurch gekennzeichnet, dass** die suberinreichen Kügelchen mit einem Bindemittel gemischt sind.

16. Zusammensetzung gemäß Anspruch 15, **dadurch gekennzeichnet, dass** es sich bei dem Bindemittel um einen Nahrungsmittel-Klebstoff vom Polyurethan- oder Acryltyp handelt.

17. Stöpsel zum Verschließen von Flaschen mit stillen oder schäumenden alkoholischen Getränken oder mit Kohlensäure versetzten Getränken, **dadurch gekennzeichnet, dass** er eine Zusammensetzung gemäß einem der Ansprüche 13 bis 16 enthält.

## Claims

1. Process for manufacturing a composition which can be used for the production of stoppers, **characterized in that** it comprises the following steps:
a) sheets of cork are ground into small-sized granules,
b) the said cork granules are decomposed into granules having a high lignin content and into granules having a high suberin content, and
c) the lignin-rich granules are separated from the suberin-rich granules in order to keep only the suberin-rich granules in the said composition.

2. Process according to Claim 1, **characterized in that** the cork granules obtained in step a) by grinding have a size of between 3 and 8 mm.

3. Process according to either of Claims 1 and 2, **characterized in that** the cork granules are decomposed in step b) by means of shock waves propagating within the said granules, the velocity of propagation of the said shock waves being different in the compounds of different density.

4. Process according to Claim 3, **characterized in that** the shock waves are produced by means of a plasma created in an aqueous medium.

5. Process according to Claim 4, **characterized in that** the medium for propagating the shock waves into the cork granules is the aqueous medium itself in which the said granules are immersed.

6. Process according to Claim 4, **characterized in that** the medium for propagating the shock waves into the cork granules is air, the shock waves being transmitted to the granules via a flexible membrane which separates them from an electrode placed in the aqueous medium for the purpose of forming the plasma which generates the said waves.

7. Process according to Claim 3, **characterized in that** the shock waves are produced by explosion.

8. Process according to Claim 3, **characterized in that** the shock waves are produced by decompression.

9. Process according to one of Claims 1 to 8, **characterized in that** separation step c) is carried out by flotation.

10. Process according to one of Claims 1 to 8, **characterized in that** separation step c) is carried out by centrifuging.

11. Process according to one of Claims 1 to 8, **characterized in that** separation step c) is carried out by diffusion.

12. Process according to one of Claims 1 to 11, **characterized in that** it comprises an additional step consisting in mixing the isolated suberin-rich granules with a binder which may be, for example, a food-grade adhesive of the polyurethane or acrylic type.

13. Composition which can be used for the manufacture of stoppers, **characterized in that** it comprises suberin-rich granules.

14. Composition according to Claim 13, **characterized in that** the said suberin-rich granules have a density of less than 90 kg/m³.

15. Composition according to either of Claims 13 and 14, **characterized in that** the said suberin-rich granules are mixed with a binder.

16. Composition according to Claim 15, **characterized in that** the binder is a food-grade adhesive of the polyurethane or acrylic type.

17. Stopper intended to seal bottles of still or effervescent alcoholic drinks or of carbonated drinks, **characterized in that** it comprises the composition according to one of Claims 13 to 16.
